(19) Europäisches Patentamt
European Patent Office
Office européen des brevets

(11) Veröffentlichungsnummer: **0 183 870**
**B1**

(12) **EUROPÄISCHE PATENTSCHRIFT**

(45) Veröffentlichungstag der Patentschrift:
27.09.89

(51) Int. Cl.⁴: **A 01 F 12/60**

(21) Anmeldenummer: **84114894.3**

(22) Anmeldetag: **07.12.84**

(54) Entleerungsvorrichtung für den Sammelbehälter einer Erntemaschine.

(43) Veröffentlichungstag der Anmeldung:
**11.06.86 Patentblatt 86/24**

(45) Bekanntmachung des Hinweises auf die Patenterteilung:
**27.09.89 Patentblatt 89/39**

(84) Benannte Vertragsstaaten:
**DE FR GB IT**

(56) Entgegenhaltungen:
**DE-A- 1 960 798**
**DE-A- 2 036 301**
**DE-A- 3 205 605**
**FR-A- 1 488 605**
**FR-A- 2 256 715**
**FR-A- 2 356 355**
**US-A- 3 872 982**

(73) Patentinhaber: **DEERE & COMPANY, 1 John Deere Road, Moline Illinois 61265 (US)**

(72) Erfinder: **Rohwedder, Helmut, Rosenstrasse 12, D-6660 Zweibrücken (DE)**

(74) Vertreter: **Feldmann, Bernhard et al, DEERE & COMPANY European Office, Patent Department Steubenstrasse 36-42 Postfach 503, D-6800 Mannheim 1 (DE)**

## Beschreibung

Die Erfindung betrifft eine Entleerungsvorrichtung einer Erntemaschine, insbesondere eines Mähdreschers, mit einem Sammelbehälter und einem Entleerungsrohr, wobei in dem Sammelbehälter eine erste Schneckenwelle und in dem Entleerungsrohr eine zweite Schneckenwelle angeordnet sind, die über ein Winkelgetriebe miteinander in Antriebsverbindung stehen, wobei das Entleerungsrohr um eine Schwenkachse schwenkbar an dem Sammelbehälter angebracht ist und eine Eingangswelle des Winkelgetriebes in bezug auf die zweite Schneckenwelle geneigt verläuft.

Bei einer derartigen Entleerungsvorrichtung (DE-A1-20 36 301) trägt die erste Schneckenwelle endseitig ein Kegelrad, das mit einem Kegelrad einer Zwischenwelle kämmt, die in dem Entleerungsrohr gelagert ist. Das von diesen Kegelrädern gebildete Winkelgetriebe schneidet die Trennungsebene zwischen dem Sammelbehälter und dem Entleerungsrohr und liegt nahe der Schwenkachse des Entleerungsrohrs.

Diese Entleerungsvorrichtung ist insofern nachteilig, als das insbesondere während des Entladevorgangs auf das Entleerungsrohr wirkende Biegemoment sich auch auf den Eingriff beider Kegelräder ineinander auswirkt. Dadurch können Schäden an den Zahnflanken und in den Lagerungen entstehen, die einen frühzeitigen Verschleiß hervorrufen.

Die der Erfindung zugrunde liegende Aufgabe wird darin gesehen, eine Entleerungsvorrichtung zu entwickeln, die ein um mindestens 90° schwenkbares Entleerungsrohr enthält, dessen Förderelement über den gesamten Verstellweg antreibbar ist und dessen Antriebsteile nicht der Biegebelastung des Entleerungsrohrs ausgesetzt sind.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise ist eine gelenkige Verbindung zwischen der Schneckenwelle des Sammelbehälters und der des Entleerungsrohrs gegeben, die aufgrund der Biegebelastung sich ergebende Formveränderungen des Entleerungsrohrs im Bereich des Winkelgetriebes ausgleicht und nicht überträgt. Weiterhin ist durch die Lage des Winkelgetriebes und durch die Wahl der Angriffsstelle der Kreuzgelenke der Zwischenwelle an dem Winkelgetriebe gewährleistet, daß eine Auslenkung der Kreuzgelenke nur in einem zulässigen Winkelbereich erfolgt, der eine störungsfreie Antriebsübertragung erlaubt.

Durch die vorteilhafte Ausbildung und Anordnung des Entleerungsrohres, das über ein Drehkranzgehäuse am Austragende des Sammelbehälters schwenkbar gelagert ist und über lediglich eine gelenkig ausgebildete Zwischenwelle und ein Winkelgetriebe angetrieben wird. kommt man mit relativ kostengünstigen Antriebselementen aus. wobei gleichzeitig das Bauvolumen der Antriebsvorrichtung. insbesondere des Drehkranzgehäuses, klein gehalten werden kann. Ferner können die einzelnen Antriebselemente sich innerhalb des Drehkranzgehäuses so plazieren lassen, daß sie nicht innerhalb des Hauptgutsstromes liegen. Durch die Verwendung lediglich einer Zwischenwelle und nur eines Winkelgetriebes läßt sich das Entleerungsrohr um mindestens 90° verschwenken und in jeder Stellung ständig antreiben. Die Verwendung der Zwischenwelle mit Kreuzgelenken zur Antriebsverbindung zwischen dem Austragende der Förderschnecke im Sammelbehälter und der zweiten Zwischenwelle ergibt einen annähernd gleichförmigen Antrieb für die Entleerungsschnecke im Entleerungsrohr. Da der Abstand zwischen der Schnittstelle der ersten Zwischenwelle und der zweiten Zwischenwelle veränderbar ist, kann der Differenzabstand beim Schwenkvorgang des Entleerungsrohres auf einfache Weise ausgeglichen werden. Hierzu ist es gemäß der Erfindung vorteilhaft, daß die erste Zwischenwelle zwischen den zwei Kreuzgelenken einen Teleskopteil aufweist.

In weiterer Ausgestaltung der Erfindung ist es vorteilhaft, daß das Entleerungsrohr über ein Drehkranzgehäuse und einen Drehflansch an den Sammelbehälter des Mähdreschers angeschlossen ist und im Drehkranzgehäuse die beiden Zwischenwellen drehbar gelagert sind, die mit Bezug auf die durch die Schwenkachse verlaufende Vertikalebene auf einer geneigt verlaufenden Ebene liegen, wobei die beiden Ebenen einen nach oben offenen, spitzen Winkel einschließen. Durch die vorteilhafte Ausbildung und Anordnung des Drehkranzgehäuses sowie der beiden Zwischenwellen wird der Durchfluß des Erntegutes, das aus dem Sammelbehälter in das Drehkranzgehäuse gelangt und dann dem Entleerungsrohr zugeführt wird, nicht wesentlich behindert. Hierzu ist es vorteilhaft, daß die zweite Zwischenwelle dicht unterhalb des Drehflansches vorgesehen ist. Eine vorteilhafte Anordung der einzelnen Zwischenwellen erhält man dadurch, daß der senkrechte Abstand zwischen der Drehachse der äußeren Schneckenwelle und der Schwenkachse des Entleerungsrohres wesentlich kleiner ist als der senkrechte Abstand der Drehachse der zweiten Zwischenwelle und der Schwenkachse und daß der senkrechte Abstand der äußeren Schneckenwelle zur Schwenkachse eine Größe zwischen Null und einmal dem Radius der Schneckenwendel der Schneckenwelle aufweist. Ferner ist es vorteilhaft, daß der Außenumfang der zweiten Zwischenwelle in etwa tangential an den Außenumfang des Drehkranzes angrenzt. Hierzu ist es ferner vorteilhaft, daß das Drehkranzgehäuse über eine Halterung am Mähdrescher abgestützt ist und die Anschlußstelle der Halterung am Drehkranzgehäuse auf der Schwenkachse des Entleerungsrohres liegt.

Um eine einwandfreie Abstützung des Drehkranzgehäuses bzw. des zugehörigen Entleerungsrohres zu erhalten, ist es vorteilhaft, daß die Drehachse der inneren Schneckenwelle und die Drehachse der äußeren Schneckenwelle die Schwenkachse schneiden. Ist der Abstand A zwischen der Drehachse der äußeren Schneckenwelle und der Schwenkachse des Entleerungsrohres sehr klein bzw. Null. so kann der Durchmesser des Drehflansches ebenfalls sehr klein gewählt werden. Hierdurch wird eine kostengünstige Entleerungsvorrichtung geschaffen.

Vorteilhaft ist es ferner. daß das Winkelgetriebe mit seiner Eingangs- und Ausgangswelle an einem der verschwenkbaren Teile des Drehkranzgehäuses fest angeordnet ist und deren Drehachsen außerhalb der Schwenkachse des Entleerungsrohres liegen. Hierdurch wird der Durchflußquerschnitt im Bereich des Drehkranzes vergrößert. Außerdem ist es vorteilhaft, daß die beiden Zwischenwellen und das Winkelgetriebe im Drehkranzgehäuse angeordnet sind.

Im folgenden wird die Erfindung anhand von lediglich einen Ausführungsweg darstellenden Zeichnungen näher erläutert. Es zeigt:

Fig. 1 eine Schnittdarstellung einer Entleerungsvorrichtung für den Sammelbehälter eines Mähdreschers mit den zugehörigen Antriebsorganen,

Fig. 2 eine Ansicht entlang der Linie 2–2 gemäß Fig. 1,

Fig. 3 eine Teilansicht zweier Zwischenwellen zum Antrieb einer Schneckenwelle in der Ansicht von oben, wobei das Entleerungsrohr in etwa rechtwinklig zur Längsachse des Mähdreschers verläuft,

Fig. 4 und 5 verschiedene Stellungen des Entleerungsrohres in der Ansicht von oben,

Fig. 6 eine graphische Darstellung des Schwenkbereiches des Entleerungsrohres sowie des Schwenkbereiches der ersten Zwischenwelle.

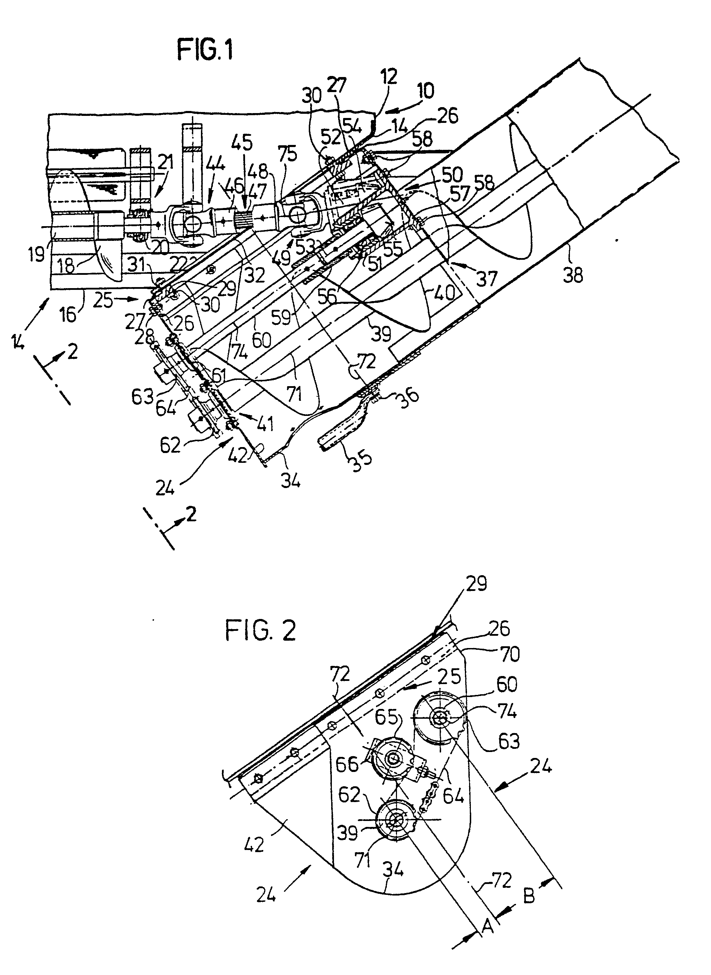

In der Zeichnung ist mit 10 ein Sammelbehälter eines in der Zeichnung der Einfachheit halber nicht dargestellten Mähdreschers bezeichnet, der aus zwei parallel zueinander verlaufenden Seitenwänden sowie einer Rück- und Vorderwand besteht. In Fig. 1 ist lediglich die rechte Seitenwand 12 angedeutet, die mit einem V-förmig ausgebildeten Boden 14 verbunden ist. Der Boden 14 des Sammelbehälters 10 weist eine Mulde 16 auf, in der eine Förderschnecke 18 drehbar gelagert ist. Die Förderschnecke 18 weist eine Schneckenwelle 19 auf, die mittels Wälzlagern 20 und einer Halterung 21 im Sammelbehälter 10 des Mähdreschers drehbar gelagert ist. Der Antrieb der Schneckenwelle 19 erfolgt über eine in der Zeichnung nicht dargestellte Antriebsvorrichtung, beispielsweise ein Riemengetriebe, das am linken äußeren Ende der Schneckenwelle 19 vorgesehen sein kann.

Mit Bezug auf Fig. 1 weist das rechte untere Ende des Sammelbehälters 10 im Boden 14 eine kreisrunde Durchlaßöffnung 22 auf, die eine Durchflußverbindung zwischen dem Sammelbehälter 10 und einem Drehkranzgehäuse 24 herstellt. Das Drehkranzgehäuse 24 ist zylinderförmig ausgebildet und weist im Bereich seines oberen Endes einen Drehkranz 25 auf, der als kreisrunder Ringflansch ausgebildet ist, wobei der untere Schenkel 26 über Schraubenbolzen 28 mit dem Drehkranzgehäuse 24 lösbar verbunden ist, während der obere Schenkel 27 in einem Drehflansch 29 drehbar aufgenommen ist. Der Drehflansch 29 weist zahlreiche mit einem gleichmäßigen Abstand zueinander angeordnete Bohrungen zur Aufnahme von Schraubenbolzen 30 auf, die hierzu in die Bohrungen des Drehflansches 29 und in entsprechende Bohrungen eines Ringflansches 31 eingeführt sind. Der Ringflansch 31 ist am Boden 14 des Sammelbehälters 10 befestigt. Der Ringflansch 31 weist eine Drehkranzöffnung 32 auf, die den gleichen Durchmesser wie die Durchlaßöffnung 22 im Boden 14 des Sammelbehälters 10 aufweist. Das Drehkranzgehäuse 24 ist mit einem Boden 34 versehen, der über eine Halterung 35 am Mähdrescher zusätzlich abgestützt ist. Die Halterung 35 ist hierzu an ihrem oberen Ende über einen Schraubenbolzen 36 an die Unterseite des Bodens 34 angeschlossen und mit ihrem anderen in der Zeichnung nicht dargestellten Ende mit dem Mähdrescher fest verbunden. Die Mittelachse des Schraubenbolzens 36 verläuft koaxial zur Schwenkachse 72 des Drehkranzgehäuses 24. Das Drehkranzgehäuse 24 weist auf seiner äußeren bzw. rechten Seite (siehe Fig. 1) eine Auslaßöffnung 37 auf, durch die das untere Ende eines Entleerungsrohres 38 gesteckt ist, so daß dieses mit dem Drehkranzgehäuse 24 fest verbunden werden kann. Im Drehkranzgehäuse 24 ist eine Schneckenwelle 39 drehbar gelagert, auf der Schneckenwendeln 40 angeordnet sind, über die das aus dem Sammelbehälter 10 abgegebene Erntegut beispielsweise einem Ladefahrzeug zugeführt werden kann. Das obere Ende der Schneckenwelle 39 lagert in einer in der Zeichnung nicht dargestellten, am Ende des Entleerungsrohres 38 vorgesehenen Halterung, während das untere Ende der Schneckenwelle 39 in einem Lager 41 aufgenommen ist, das im Boden 42 des Entleerungsrohres 38 aufgenommen ist. Der Boden 42 entspricht gleichzeitig der linken Wand des Drehkranzgehäuses 24.

Die Schneckenwelle 39 im Entleerungsrohr 38 wird über die Schneckenwelle 19 im Sammelbehälter 10 angetrieben. Hierzu ist das Ende der Schneckenwelle 19 über ein Kreuzgelenk 44 mit einer ersten Zwischenwelle 45 drehbar verbunden. Die Zwischenwelle 45 besteht aus einer mit dem Kreuzgelenk 44 fest verbundenen Buchse 46 zur verschiebbaren Aufnahme einer Profilwelle, die beispielsweise als Keilwelle 47 ausgebildet sein kann. Die Keilwelle 47 ist mit einer weiteren Buchse 48 eines Kreuzgelenkes 49 verbunden. Die Keilwelle 47 kann ebenso wie in der Buchse 46 in der Buchse 48 verschiebbar aufgenommen sein. Es ist jedoch möglich, daß die Keilwelle 47 zumindest mit einer Buchse 46 bzw. 48 über einen Stift drehfest und axial unverschiebbar verbunden ist. Das Kreuzgelenk 49 ist mit einer Eingangswelle 52 eines Kegelrades 54 eines Winkelgetriebes 50 fest verbunden. Das Kegelrad 54 ist am Ende der Eingangswelle 52 vorgesehen und steht mit einem an einer Ausgangswelle 53 angeordneten Kegelrad 55 im Eingriff. Die Kegelräder 54 und 55 sowie die zugehörige Eingangs- bzw. Ausgangswelle 52 und 53 sind in einem Kegelradgehäuse 51 mittels Wälzlagern 56 drehbar aufgenommen. Die Stirnseite des Kegelradgehäuses 51 weist einen Flansch 57 auf, der über Schraubenbolzen 58 an das Drehkranzgehäuse 24 lösbar angeschlossen ist und somit bei einer Schwenkbewegung des Entleerungsrohres 38 dessen Schwenkbewegung mitmacht. Die Ausgangswelle 53 steht über eine Muffe 59 mit einer zweiten Zwischenwelle 60 in Antriebsverbindung, deren der Muffe 59 gegenüberliegendes Ende in einem weiteren Lager 61 drehbar aufgenommen ist, das in dem Boden 42 des Drehkranzgehäuses 24 aufgenommen ist. Die Enden der Zwischenwelle 60 und der Schneckenwelle 39 erstrecken sich durch den Boden 42 des Drehkranzgehäuses 24 und weisen Kettenräder 62 und 63 auf, die über eine Kette 64 antriebsverbunden sind. Die notwendige Spannung der Kette 64 wird durch eine Spannrolle 65 (siehe Fig. 2) aufrechterhalten, die in einer Halterung 66 drehbar aufgenommen ist. Die oberhalb des muldenförmigen Bodens 34 angeordnete Schneckenwelle 39 kann mit ihrer Drehachse 71 einen Abstand A aufweisen, der wesentlich kleiner ist als der Abstand B zwischen der Schwenkachse 72 des Drehkrangehäuses 24 und der Drehachse 74 der zweiten Zwischenwelle 60. Es ist jedoch auch möglich, das Drehkranzgehäuse 24 derart auszubilden und anzuordnen, daß die Drehachse 71 der Schneckenwelle 39 genau auf der Schwenkachse 72 des Drehkranzgehäuses 24 liegt.

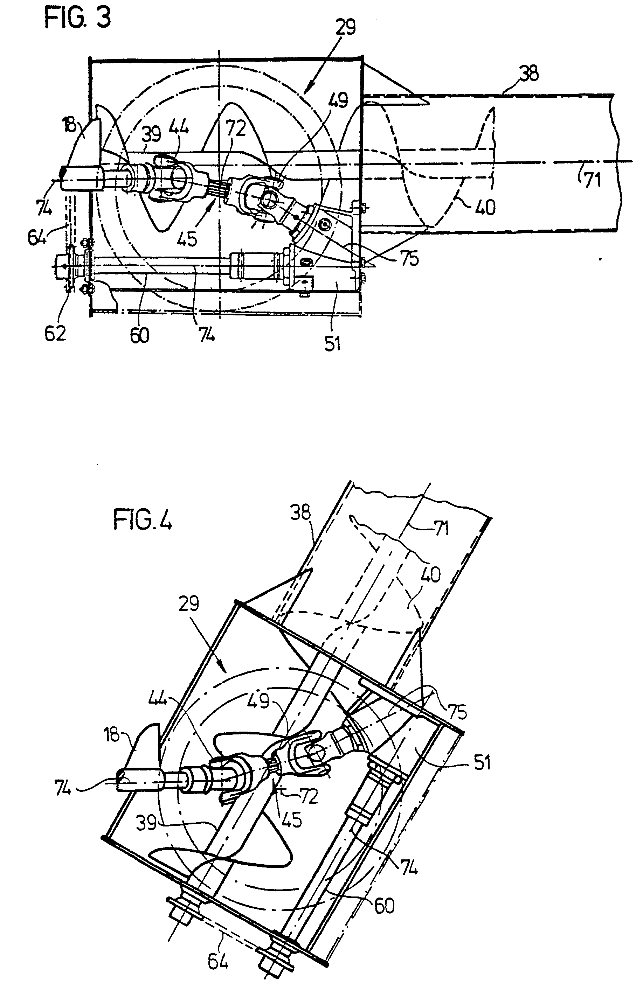

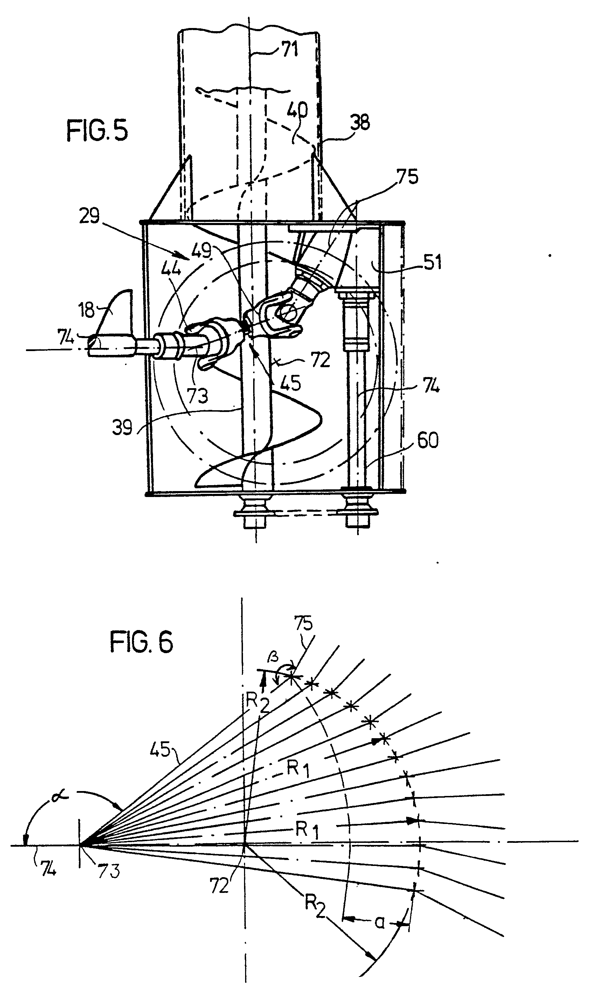

Wie aus Fig. 2 ferner hervorgeht, liegt die Drehachse 74 der zweiten Zwischenwelle 60 im oberen Bereich des Drehkranzgehäuses 24, und zwar dicht unterhalb des Drehflansches 29 und der Seitenwand 70 des Drehkranzgehäuses 24. Auf diese Weise kann das Erntegut ungehindert durch die Drehkranzöffnung 32 des Ringflansches 31 treten und von der Schneckenwendel 40 im Entleerungsrohr 38 nach außen gefördert werden. Aus den Figuren 3, 4 und 5 gehen die einzelnen Stellungen des Entleerungsrohres 38 hervor. Fig. 3 zeigt das Entleerungsrohr 38 in der ausgeschwenkten Stellung, wobei die Außenseite des Entleerungsrohres 38 mit der Längsseite des Mähdreschers einen annähernd rechten Winkel bildet. Die einzelnen Stellungen des Entleerungsrohres 38 sind ferner in der graphischen Darstellung in Fig. 6 veranschaulicht. Wie aus Fig. 6 hervorgeht, verkürzt sich beim Schwenkvorgang des Entleerungsrohres 38 und der Zwischenwelle 45 der Abstand $R_1$ + a (gemäß Fig. 6) zwischen den Kreuzgelenken 44 und 49, da das Mittelstück der ersten Zwischenwelle 45 sich auf einem Bogen bewegt, der durch den Radius $R_2$ gebildet wird. Der Radius $R_1$ läuft um einen Abwinklungspunkt 73, der durch das Kreuzgelenk 44 gebildet wird. Der Radius $R_1$ stellt den kürzesten Abstand zwischen den Kreuzgelenken 44, 49 dar. Der maximale Abstand zwischen den Kreuzgelenken 44, 49 wird in der Arbeitsstellung des Entleerungsrohres 38 gebildet und ergibt sich gemäß Fig. 6 aus dem Betrag $R_1$ + a. Gleich welche Stellung das Entleerungsrohr 38 einnimmt, bleiben die Winkel α und β stets annähernd gleich. Der Winkel α wird durch die innenliegende Schneckenwelle 19 und die Mittelachse der Buchse 46 gebildet, während der Winkel β durch die Mittelachse der Eingangswelle 52 und die Mittelachse der Buchse 48 gebildet wird. Da die beiden Winkel α und β beim Schwenkvorgang des Entleerungsrohres 38 stets annähernd gleich bleiben, kann eine gleichförmige Drehbewegung der Schneckenwelle 39 erzielt werden.

## Patentansprüche

1. Entleerungsvorrichtung einer Erntemaschine, insbesondere eines Mähdreschers, mit einem Sammelbehälter (10) und einem Entleerungsrohr (38), wobei in dem Sammelbehälter (10) eine erste Schneckenwelle (19) und in dem Entleerungsrohr (38) eine zweite Schneckenwelle (39) angeordnet sind, die über ein Winkelgetriebe (50) miteinander in Antriebsverbindung stehen, wobei das Entleerungsrohr (38) um eine Schwenkachse (72) schwenkbar an dem Sammelbehälter (10) angebracht ist und eine Eingangswelle (52) des Winkelgetriebes (50) in bezug auf die zweite Schneckenwelle (39) geneigt verläuft, dadurch gekennzeichnet, daß das Winkelgetriebe (50) an dem Entleerungsrohr (38) und mit diesem bewegbar angebracht ist, daß sich zwischen der ersten Schneckenwelle (19) und dem Winkelgetriebe (50) eine Zwischenwelle (45) mit Kreuzgelenken (44, 49) erstreckt, daß die Angriffsstelle eines Kreuzgelenks (49) der Zwischenwelle (45) an dem Winkelgetriebe (50) auf einem Kreisbogen um die Schwenkachse (72) des Entleerungsrohrs (38) bewegbar und während des gesamten Schwenkvorgangs mit Bezug auf die Angriffsstelle des anderen Kreuzgelenks (44) der Zwischenwelle (45) an der ersten Schneckenwelle (19) und von dieser aus gesehen gegenüber der Schwenkachse (72) gelegen ist.

2. Entleerungsvorrichtung nach Anspruch 1, dadurch gekennzeichnet, daß die erste Zwischenwelle (45) zwischen den zwei Kreuzgelenken (44, 49) einen Teleskopteil aufweist.

3. Entleerungsvorrichtung nach Anspruch 1 oder 2, dadurch gekennzeichnet, daß das Entleerungsrohr (38) über ein Drehkranzgehäuse (24) und einen Drehflansch (29) an den Sammelbehälter (10) des Mähdreschers angeschlossen ist und im Drehkranzgehäuse (24) die beiden Zwischenwellen (45, 60) drehbar gelagert sind, die mit Bezug auf die durch die Schwenkachse (72) verlaufende Vertikalebene auf einer geneigt verlaufenden Ebene liegen, wobei die beiden Ebenen einen nach oben offenen, spitzen Winkel einschließen.

4. Entleerungsvorrichtung nach einem oder mehreren der vorherigen Ansprüche, dadurch gekennzeichnet, daß die zweite Zwischenwelle (60) dicht unterhalb des Drehflansches (29) vorgesehen ist.

5. Entleerungsvorrichtung nach einem oder mehreren der vorherigen Ansprüche, dadurch gekennzeichnet, daß der senkrechte Abstand (A) zwischen der Drehachse (71) der äußeren Schneckenwelle (39) und der Schwenkachse (72) des Entleerungsrohres (38) wesentlich kleiner ist als der senkrechte Abstand (B) zwischen der Drehachse (74) der zweiten Zwischenwelle (60) und der Schwenkachse (72).

6. Entleerungsvorrichtung nach einem oder mehreren der vorherigen Ansprüche, dadurch gekennzeichnet, daß der senkrechte Abstand (A) der äußeren Schneckenwelle (39) zur Schwenkachse (72) eine Größe zwischen Null und einmal dem Radius (R) der Schneckenwendel (40) der Schneckenwelle (39) aufweist.

7. Entleerungsvorrichtung nach einem oder mehreren der vorherigen Ansprüche, dadurch gekennzeichnet, daß der Außenumfang der zweiten Zwischenwelle (60) in etwa tangential an den Außenumfang des Drehkranzes (25) angrenzt.

8. Entleerungsvorrichtung nach einem oder mehreren der vorherigen Ansprüche, dadurch gekennzeichnet, daß das Drehkranzgehäuse (24) über eine Halterung (35) am Mähdrescher abgestützt ist und die Anschlußstelle der Halterung (35) am Drehkranzgehäuse (24) auf der Schwenkachse (72) des Entleerungsrohres (38) liegt.

9. Entleerungsvorrichtung nach einem oder mehreren der vorherigen Ansprüche, dadurch gekennzeichnet, daß die Drehachse der inneren Schneckenwelle (19) und die Drehachse (71) der äußeren Schneckenwelle (39) die Schwenkachse (72) schneiden.

10. Entleerungsvorrichtung nach einem oder mehreren der vorherigen Ansprüche, dadurch gekennzeichnet, daß das Winkelgetriebe (50) mit seiner Eingangs- und Ausgangswelle (52, 53) an einem der verschwenkbaren Teile des Drehkranzgehäuses (24) fest angeordnet ist und die Drehachsen der Eingangs- und Ausgangswelle (52, 53) außerhalb der Schwenkachse (72) des Entleerungsrohres (38) liegen.

11. Entleerungsvorrichtung nach einem oder mehreren der vorherigen Ansprüche, dadurch gekennzeichnet, daß die beiden Zwischenwellen (45, 60) und das Winkelgetriebe (50) im Drehkranzgehäuse (24) angeordnet sind.

## Claims

1. Discharge device for a harvesting machine, especially a combine harvester, with a storage container (10) and a discharge pipe (38), a first auger shaft (19) being arranged in the storage container (10) and a second auger shaft (39) in the discharge pipe (38), which shafts are drivingly connected together through a bevel gearing (50), the discharge pipe (38) being fitted for swinging about a pivotal axis (72) on the storage container (10) and wherein an input shaft (52) of the bevel gearing (50) runs at an inclination to the second auger shaft (39), characterized in that the bevel gearing (50) is fittet to the discharge pipe (38) and is movable therewith, in that there extends between the first auger shaft (19) and the bevel gearing (50) an intermediate shaft (45) with universal joints (44, 49), in that the point of engagement of one universal joint (49) of the intermediate shaft (45) with the bevel gearing (50) is movable on an arc about the pivotal axis (72) of the discharge pipe (38) and during the whole swinging procedure is situated, with reference to the point of engagement of the other universal joint (44) of the intermediate shaft (45) with the first auger shaft (19) and viewed outwardly therefrom, opposite the pivotal axis (72).

2. Discharge device according to claim 1, characterized in that the first intermediate shaft (45) has a telescopic part between the two universal joints (44, 49).

3. Discharge device according to claim 1 or 2, characterized in that the discharge pipe (38) is connected to the storage container (10) of the combine harvester by a rotary crown housing (24) and a rotary flange (29) an the two intermediate shafts (45, 60) are rotatable mounted in the rotary housing (24), which shafts lie in a plane inclined with reference to the vertical plane running through the pivotal axis (72), whereby the two planes include an upwardly open acute angle.

4. Discharge device according to one or more of the preceding claims, characterized in that the second intermediate shaft (60) is provided closely beneath the rotary flange (29).

5. Discharge device according to one or more of the preceding claims, characterized in that the perpendicular distance (A) between the axis of rotation (71) of the outer auger shaft (39) and the pivotal axis (72) of the discharge pipe (38) is substantially smaller than the perpendicular distance (B) between the axis of rotation (74) of the second intermediate shaft (60) and the pivotal axis (72).

6. Discharge device according to one or more of the preceding claims, characterized in that the perpendicular distance (A) of the outer auger shaft (39) from the pivotal axis (72) has a magnitude between zero and one times the radius (R) of the auger flight (40) of the auger shaft (39).

7. Discharge device according to one or more of the preceding claims, characterized in that the outer periphery of the second intermediate shaft (60) borders approximately tangentially on the outer periphery of the rotary crown (25). .

8. Discharge device according to one or more of the preceding claims, characterized in that the rotary crown housing (24) is supported on the combine harvester by a stay (35) and the point of connection of the stay (35) to the rotary crown housing (24) lies on the pivotal axis (72) of the discharge pipe (38).

9. Discharge device according to one or more of the preceding claims, characterized in that the axis of rotation of the inner auger shaft (19) and the axis of rotation of the outer auger shaft (39) intersect the pivotal axis (72).

10. Discharge device according to one or more of the preceding claims, characterized in that the bevel gearing (50) is fixedly arranged on one of the swinging parts of the rotary crown housing (24) with its input and output shafts (52, 53) and the axes of rotation of the input and output shafts (52, 53) lie outside the pivotal axis (72) of the discharge pipe (38).

11. Discharge device according to one or more of the preceding claims, characterized in that the two intermediate shafts (45, 60) an the bevel gearing (50) are arranged in the rotary crown housing (24).

## Revendications

1. Dispositif de vidage d'une moissonneuse, en particulier d'une moissonneuse-batteuse comportant un réservoir collecteur (10) et un tube de vidage (38), un premier arbre à hélice (19) étant placé dans le réservoir collecteur (10) et un second arbre à hélice (39) étant placé dans le tube de vidage (38), lesquels sont reliés cinématiquement entre eux par l'intermédiaire d'un engrenage conique (50), le tube de vidage (38) étant placé de façon à pouvoir pivoter autour d'un axe de pivotement (72) sur le réservoir collecteur (10) et un arbre d'entrée (52) de l'engrenage conique (50) ayant une direction inclinée par rapport au second arbre à hélice (39), caractérisé en ce que l'engrenage conique (50) est placé sur le tube de vidage (38) et de façon à pouvoir se déplacer avec lui, en ce qu'un arbre intermédiaire (45) comportant des joints universels (44, 49) s'étend entre le premier arbre à hélice (19) et l'engrenage conique (50), en ce que le point d'application d'un joint universel (49) de l'arbre intermédiaire (45) à l'engrenage conique (50) est placé de façon à pouvoir se déplacer sur un arc de cercle autour de l'axe de pivotement (72) du tube de vidage (38) et, pendant tout le pivotement par rapport au point d'application de l'autre joint universel (44) de l'arbre intermédiaire (45) au premier arbre à hélice (19) et vu de celui-ci, en face de l'axe de pivotement (72).

2. Dispositif de vidage suivant la revendication 1, caractérisé en ce que le premier arbre intermédiaire (45) comporte une partie télescopique entre les deux joints universels (44, 49).

3. Dispositif de vidage suivant la revendication 1 ou 2, caractérisé en ce que le tube de vidage (38) est raccordé par un carter de couronne de rotation (24) et une collerette de rotation (29) au réservoir collecteur (10) de la moissonneuse-batteuse et dans le carter de couronne de rotation (24) sont montés de façon à pouvoir tourner les deux arbres intermédiaires (45, 60) qui se trouvent, par rapport au plan vertical passant par l'axe de pivotement (72), dans un plan incliné, les deux plans faisant un angle aigu ouvert vers le haut.

4. Dispositif de vidage suivant une ou plusieurs des revendications précédentes, caractérisé en ce que le second arbre intermédiaire (60) est prévu juste au-dessous de la collerette de rotation (29).

5. Dispositif de vidage suivant une ou plusieurs des revendications précédentes, caractérisé en ce que la distance verticale (A) entre l'axe de rotation (71) de l'arbre fileté extérieur (39) et l'axe de pivotement (72) du tube de vidage (38) est nettement inférieure à la distance verticale (8) entre l'axe de rotation (74) du second arbre intermédiaire (60) et l'axe de pivotement (72).

6. Dispositif de vidage suivant une ou plusieurs des revendications précédentes, caractérisé en ce que la distance verticale (A) de l'arbre à hélice extérieur (39) à l'axe de pivotement (72) a une valeur comprise entre zéro et une fois le rayon (R) de l'hélice (40) de l'arbre à hélice (39).

7. Dispositif de vidage suivant une ou plusieurs des revendications précédentes, caractérisé en ce que la périphérie extérieure du second arbre intermédiaire (60) est contiguë sensiblement tangentiellement à la périphérie extérieure de la couronne de rotation (25).

8. Dispositif de vidage suivant une ou plusieurs des revendications précédentes, caractérisé en ce que le carter de couronne de rotation (24) s'appuie par l'intermédiaire d'une fixation (35) à la moissonneuse-batteuse et le point de raccordement de la fixation (35) au carter de couronne de rotation (24) se trouve sur l'axe de pivotement (72) du tube de vidage (38).

9. Dispositif de vidage suivant une ou plusieurs des revendications précédentes, caractérisé en ce que l'axe de rotation de l'arbre à hélice intérieur (19) et l'axe de rotation (71) de l'arbre à hélice extérieur (39) coupent l'axe de pivotement (72).

10. Dispositif de vidage suivant une ou plusieurs des revendications précédentes, caractérisé en ce que l'engrenage conique (50) est placé fixement avec son arbre d'entrée et son arbre de sortie (52, 53) sur l'une des parties pivotantes du carter de couronne de rotation (24) et les axes de rotation des arbres d'entrée et de sortie (52, 53) se trouvent à l'extérieur de l'axe de pivotement (72) du tube de vidage (38).

11. Dispositif de vidage suivant une ou plusieurs des revendications précédentes, caractérisé en ce que les deux arbres intermédiaires (45, 60) et l'engrenage conique (50) sont placés dans le carter de couronne de rotation (24).

# FIG.1

# FIG. 2

FIG. 3

FIG. 4

FIG.5

FIG. 6